Europäisches Patentamt

European Patent Office

Office européen des brevets

(19)

(11) Numéro de publication: **0 114 559**
**B1**

(12) **FASCICULE DE BREVET EUROPÉEN**

(45) Date de publication du fascicule du brevet:
08.04.87

(51) Int. Cl.⁴: **H 04 N 9/04**

(21) Numéro de dépôt: **83402553.8**

(22) Date de dépôt: **28.12.83**

(54) **Procédé de correction permanente de couleur applicable à la prise de vues vidéo et système mettant en oeuvre ce procédé.**

(30) Priorité: **30.12.82 FR 8222102**

(43) Date de publication de la demande:
**01.08.84 Bulletin 84/31**

(45) Mention de la délivrance du brevet:
**08.04.87 Bulletin 87/15**

(84) Etats contractants désignés:
**BE CH DE FR GB IT LI NL SE**

(56) Documents cité:
**FR-A-2 464 611**
**GB-A-2 052 209**

(73) Titulaire: **Guichard, Jacques, 8/10 rue des Morillons, F-75015 Paris (FR)**

(72) Inventeur: **Guichard, Jacques, 8/10 rue des Morillons, F-75015 Paris (FR)**

(74) Mandataire: **Mongrédien, André, c/o BREVATOME 25, rue de Ponthieu, F-75008 Paris (FR)**

EP 0 114 559 B1

# 0 114 559

## Description

La présente invention a pour objet un procédé de correction de couleur et un système mettant en oeuvre ce procédé.

Elle trouve une application particulière en prise de vues vidéo grand public, en visiophonie en couleur et plus généralement en traitement d'images en couleur.

On connaît déjà des procédés de correction de prise de vues, en particulier des procédés de réglage du blanc adaptés aux caméras de télévision. Le document FR-A-2464611 décrit ainsi une technique dans laquelle on dispose devant la caméra à corriger un écran complètement blanc (ou un écran présentant des couleurs à l'état équilibré, c'est-à-dire de couleur moyenne blanche), on effectue une prise de vues de cet écran et l'on corrige les circuits de la caméra pour que les signaux électriques de couleur qu'elle délivre correspondent effectivement au blanc.

Pour effectuer cette correction on mesure déjà la couleur moyenne perçue par la caméra en formant la moyenne des signaux sur des images complètes. Cette moyenne est obtenue de manière analogique par un filtrage passe-bas. Par comparaison avec des signaux correspondant au blanc idéal, on en déduit des signaux d'erreur qui viennent modifier une chaîne d'amplification ou des additionneurs jusqu'à l'obtention de signaux électriques correspondant à un blanc idéal (R-Y = B-Y = 0 ou R, V, B dans un rapport 1).

Ce réglage ayant été obtenu, la caméra est utilisée normalement pour la prise de vues d'une scène quelconque, le réglage étant maintenu inchangé pendant cette prise de vues.

Une telle technique ne fournit donc pas un procédé de correction permanente, puisque le réglage est effectué une fois pour toutes. En outre, elle implique que l'on dispose d'un écran parfaitement blanc, ce qui n'est pas toujours le cas en cours de prise de vues. Enfin, ce procédé ne saurait corriger une image qui présenterait une dominante de couleur intempestive, du fait par exemple d'un éclairage imparfait.

Le but de l'invention est justement de remédier à ces inconvénients en proposant un procédé et un système qui permettent une correction permanente et sans écran de référence. Par ailleurs, l'invention permet une grande variété de types de correction et ne se limite plus au réglage du blanc.

Ces buts sont atteints par la mise en oeuvre des moyens suivants:

a) - tout d'abord on s'affranchit de l'utilisation d'un écran de référence (blanc ou équilibré),

b) - grâce à un traitement qui porte sur l'image même résultant de la prise de vues, une analyse de l'image est effectuée, non pas en traitant la totalité des signaux d'image mais en prélevant seulement certains échantillons correspondant à certains points de l'image,

c) - on renonce au filtrage passe-bas sur une image,

d) - on effectue un calcul numérique de moyenne, non pas sur la totalité de l'image mais sur les échantillons prélevés, ce qui permet d'obtenir une couleur moyenne pour la scène faisant l'objet de la prise de vues (et non comme dans l'art antérieur cité, une couleur moyenne correspondant à un écran blanc),

e) - on calcule des coefficients correcteurs à partir de cette couleur moyenne obtenue, ces coefficients étant définis en fonction de critères divers; appliqués aux échantillons prélevés, ces coefficients donnent des échantillons corrigés, lesquels définissent une couleur moyenne corrigée,

f) - ces coefficients correcteurs, qui ont été obtenus à partir de certains échantillons de l'image, sont appliqués à tous les signaux délivrés par le dispositif de prise de vues, lesquels se trouvent ainsi corrigés,

g) - le calcul des coefficients correcteurs est réactualisé par le prélèvement de nouveaux échantillons.

On comprend qu'un tel processus est très avantageux. Tout d'abord, il est en permanence adapté à la scène visée et ceci grâce à la réactualisation. Celle-ci peut être mise en oeuvre à chaque nouvelle image. Un nouveau jeu d'échantillons est alors pris en compte à chaque image et une nouvelle couleur moyenne est obtenue. Mais la réactualisation peut être effectuée toutes les N images (N entier quelconque) ou seulement lorsque la couleur moyenne s'écarte trop d'une référence.

Ensuite, le procédé de l'invention est complètement automatique et ne nécessite aucune intervention de l'opérateur (manipulation d'écrans blancs, de filtres colorés, etc...).

Enfin, il est d'une grande souplesse. En effet, les échantillons servant à déterminer la couleur moyenne peuvent être choisis de bien des manières: soit en prélevant plusieurs points par image, soit en prélevant un seul point par image, soit en modifiant la position du ou des points d'image en image, de manière prédéterminée ou de manière aléatoire, soit en prélevant des points sur des groupes d'images consécutives ou non, etc...

En ce qui concerne la correction proprement dite, là encore une grande souplesse est offerte par l'invention. Naturellement on peut s'efforcer d'atteindre une couleur de référence; mais on peut aussi se contenter de réduire l'écart entre la couleur moyenne observée et la couleur de référence; on peut même décider d'amplifier cet écart dans des circonstances exceptionnelles (images unicolores, effets spéciaux, etc...). Cette grande variété de corrections n'était pas possible dans l'art antérieur cité du fait même du principe utilisé, basé sur l'annulation d'un signal d'erreur reflétant l'écart entre une valeur mesurée et une valeur de référence. Dans l'art antérieur on ne peut donc qu'atteindre une couleur de référence (en l'occurrence le blanc).

De façon plus précise, la présente invention a pour objet un procédé de correction permanente de couleur applicable à un dispositif de prise de vues vidéo, ce dispositif engendrant des signaux primaires aptes à caractériser l'état colorimétrique de l'image, un traitement étant effectué sur ces signaux pour les corriger, ce procédé étant caractérisé par le fait qu'il consiste à:

- prélever en cours de prise de vues des échantillons des signaux relatifs à certains points des images,

2

- mémoriser sous forme numérique un ensemble de ces échantillons relatifs à au moins une image,

- calculer numériquement les moyennes des échantillons mémorisés, ce qui définit une couleur moyenne,

- calculer des coefficients correcteurs à partir de la couleur moyenne obtenue, ces coefficients correcteurs, lorsqu'appliqués aux échantillons, définissant une couleur moyenne corrigée,

- appliquer à tous les signaux délivrés par le dispositif de prise de vues, pour tous les points des images, les coefficients correcteurs ainsi calculés, ce qui fournit des signaux corrigés,

- réactualiser le calcul des coefficients correcteurs en réactualisant l'ensemble des échantillons servant à calculer lesdites moyennes.

La présente invention a également pour objet un système de correction permanente de couleur mettant en oeuvre le procédé défini ci-dessus, ce système étant associé à un dispositif de prise de vues vidéo engendrant des signaux aptes à caractériser la luminance et la couleur de ce point, ce système comprenant des moyens pour effectuer un traitement de ces signaux et pour en déduire une correction de ces signaux, ce système étant caractérisé par le fait qu'il comprend:

- un organe de traitement numérique apte à prélever en cours de prise de vues des échantillons des signaux relatifs à certains points des images, à mémoriser sous forme numérique un ensemble de ces échantillons relatifs à au moins une image, à calculer numériquement les moyennes des échantillons mémorisés, ce qui définit une couleur moyenne, à calculer numériquement des coefficients correcteurs à partir de la couleur moyenne obtenue, ces coefficients correcteurs lorsqu'appliqués aux échantillons, définissant une couleur moyenne corrigée; et apte à réactualiser le calcul des coefficients correcteurs en réactualisant l'ensemble des échantillons servant à calculer les moyennes,

- un circuit de correction à deux entrées, l'une reliée à la sortie du dispositif de prise de vues et l'autre reliée à l'organe de traitement et recevant de celui-ci les coefficients correcteurs, et a une sortie délivrant des signaux corrigés.

Les caractéristiques de l'invention seront mieux comprises après la description qui suit, d'exemples de réalisation donnés à titre explicatif et nullement limitatif. Cette description se réfère à des dessins annexés sur lesquels:

- la figure 1 montre un plan de couleur permettant de situer la couleur moyenne obtenue avant et après correction,

- la figure 2 est un plan de couleur illustrant une correction particulière,

- la figure 3 est un diagramme à trois dimensions illustrant un type particulier de correction dans des plans de luminance constante,

- la figure 4 est une projection du diagramme précédent sur un plan de luminance constante,

- la figure 5 illustre une correction apportée dans un plan de luminance constante,

- la figure 6 est un schéma général d'un dispositif de prise de vues selon l'invention,

- la figure 7 représente la structure d'un organe de traitement numérique utilisable dans l'invention,

- la figure 8 illustre un premier mode de réalisation d'un circuit de correction,

- la figure 9 illustre un second mode de réalisation d'un circuit de correction,

- la figure 10 illustre une fonction d'écrêtage.

Le procédé de l'invention traite indifféremment les composantes de couleurs primaires, notées classiquement R, V, B, les signaux de luminance et de couleur notés Y, DR, DB ceci dans les systèmes PAL et SECAM et les signaux Y, $E_I$, $E_Q$ dans le système NTSC. On rappelle que R, V, B étant trois primaires réelles d'un système trichrome, elles sont toutes trois positives ou nulles et que Y, DR, DB désignent trois primaires virtuelles (c'est-à-dire irréalisables physiquement dans leur ensemble) telles que Y représente la luminance (c'est-à-dire l'image en noir et blanc) et DR, DB l'information de couleur, Y est alors positif ou nul et DB, DR sont de signe quelconque.

On passe d'un système à l'autre par les formules approchées suivantes:

$Y = 0,3R + 0,59V + 0,11B$

$DR = R - Y$

$DB = B - Y$

ou inversement:

$$R = Y + DR$$
$$V = Y - \frac{0,3}{0,59}DR - \frac{0,11}{0,59}DB$$
$$B = Y + DB$$

Pour une image en noir et blanc, on a:

$R = V = B = Y$ et $DR = DB = 0$

De même on passe de DR, DB a $E_Q$, $E_I$ par les relations:

$E_Q = 0,48DR + 0,41DB$

$E_I = 0,74DR - 0,27DB$

On passe de $E_I$, $E_Q$ à R, V, B ou inversement par les relations:

$E_Q = 0,21R - 0,52V + 0,31B$

$E_I = 0,39R - 0,67V + 0,28B$

et

$R = Y + 0,62E_Q + 0,95E_I$

$V = Y - 0,63E_Q - 0,20E_I$

$B = Y + 1,72E_Q - 1,11E_I$

Dans toute la suite on désignera, de manière générale par primaires (réelles ou virtuelles) l'une quelconque de ces représentations qui permet de caractériser l'état colorimétrique d'un point.

La première opération effectuée selon l'invention est un calcul de moyenne. Cette moyenne peut être une moyenne arithmétique ou une moyenne pondérée. Si l'on note M l'opération moyenne, on calcule $Ro = M(R)$, $Vo = M(V)$, $Bo = M(B)$, dans le cas où l'on fait usage des couleurs primaires, $Yo = M(Y)$, $DRo = M(DR)$, $DBo = M(DB)$ dans le cas où l'on utilise des signaux différence, et $Yo = M(Y)$, $E_{Qo} = M(E_Q)$, $E_{Io} = M(E_I)$ dans le dernier cas.

Ces moyennes s'obtiennent en prélevant dans (ou à la sortie de) la caméra de prise de vues les signaux R, V, B ou Y, DR, DB, ou Y, $E_Q$, $E_I$ pour plusieurs points d'image. Le calcul des moyennes met en oeuvre des moyens de traitement numérique organisés autour d'un microprocesseur. Comme un microprocesseur n'est en général pas assez rapide pour effectuer, en temps réel, la moyenne des signaux relatifs à tous les points constituant une image, on doit effectuer un échantillonnage en prélevant les signaux relatifs à un ou quelques points dans une ou plusieurs images et en calculant la moyenne sur une ou plusieurs images.

Par exemple, on peut prélever les signaux relatifs à un point par image et effectuer une moyenne sur 128 images successives. Le point choisi dans l'image n'est de préférence jamais le même. Il peut être déplacé de proche en proche.

Selon une variante avantageuse, les coordonnées du point échantillonné varient de façon pseudo-aléatoire, de manière à répartir sur la totalité de l'étendue des images les points choisis et à ne privilégier aucune zone. Le microprocesseur doit alors engendrer une séquence pseudo-aléatoire à deux dimensions déterminant les coordonnées du point à prélever. A chaque image (ou à chaque trame, le microprocesseur stocke un nouveau point, abandonne le 129ème plus ancien, et calcule les nouvelles moyennes sur les 128 points les plus récents. Tous ces points peuvent être interprétés comme formant un nuage de points dans un système de référence RVB à trois dimensions. Les valeurs moyennes de ces points représentent les coordonnées du centre de gravité du nuage de points. Ces questions seront reprises en détail plus loin.

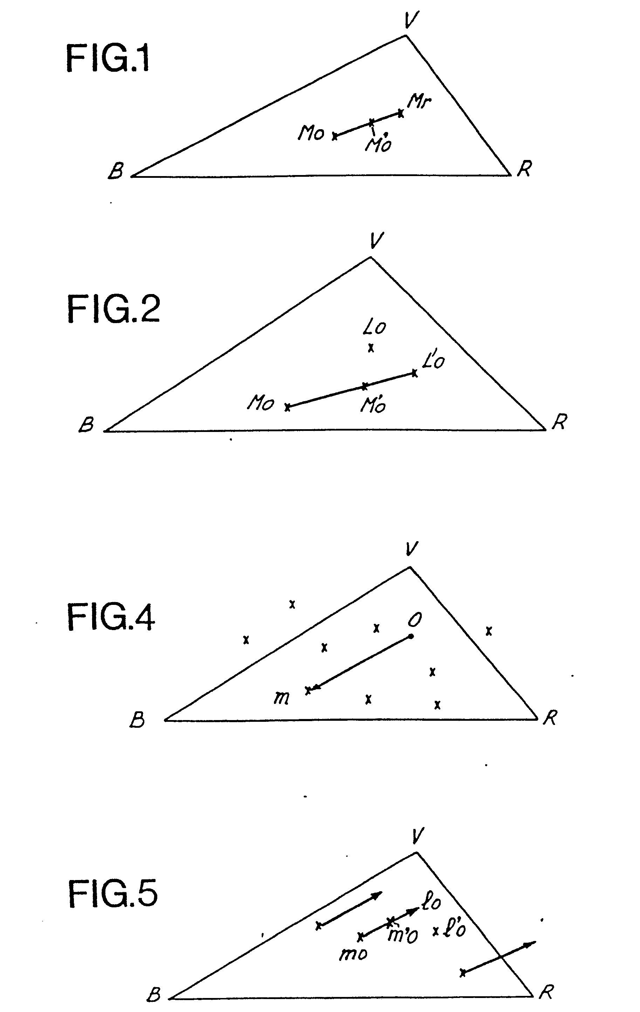

Une fois connue la couleur moyenne, les coefficients de correction appropriés peuvent être calculés et transmis à un dispositif de correction. Ces coefficients sont, par exemple, calculés à chaque image (ou trame) et sont transmis pendant les retours d'image (ou de trame). La manière de calculer ces coefficients de correction est illustrée par les figures 1 à 5.

La figure 1 tout d'abord montre un plan de couleur selon une représentation classique dans laquelle un point, représenté par trois coordonnées R, V, B, définit une couleur particulière. Tel que représenté le plan correspond à un plan de luminance constante. Sur cette figure, le point Mo correspond aux moyennes Ro, Vo, Bo calculées et le point Mr à une couleur de référence définie par ses trois composantes Rr, Vr, Br. En général, cette couleur de référence est le gris pour lequel les trois composantes sont égales. Comme R, V, B sont liés par $Y = 0,3R + 0,59V + 0,11B$, si $R = V = B$ on a nécessairement $R = V = B = Y$. Ainsi, avec une couleur de référence qui est le gris, les trois composantes de référence sont égales à une même valeur qui est une luminance de référence Yr.

Dans un premier cas simple, cette luminance de référence est prise égale à la luminance moyenne Yo des points échantillonnés. En d'autres termes, si l'on corrige les amplitudes des primaires, on conserve la luminance moyenne (mais pas la luminance de chaque point puisque les primaires R, V, B sont modifiées). Dans ce cas, les coefficients correcteurs à calculer sont simplement les quotients:

$$\frac{Yo}{Ro}, \quad \frac{Yo}{Vo}, \quad \frac{Yo}{Bo} \qquad (1)$$

La correction à apporter aux signaux R, V, B de chaque point de l'image (et pas seulement aux signaux relatifs aux points échantillonnés servant à l'établissement de la moyenne) consistera alors à multiplier ces signaux par ces coefficients. Les signaux corrigés R', V', B' seront égaux respectivement à :

$$R' = \frac{Yo}{Ro}R, \quad V' = \frac{Yo}{Vo}V, \quad B' = \frac{Yo}{Bo}B \qquad (2)$$

Les moyennes obtenues en échantillonnant ces signaux seront bien toutes égales à Yo.

Si l'on revient à la figure 1, la correction algébrique effectuée se traduit, géométriquement, par un déplacement du point Mo en Mr.

Si la luminance Yo n'est pas conservée, mais prend une valeur Yr, on prendra les coefficients suivants:

$$\frac{Yr}{Ro}, \quad \frac{Yr}{Vo}, \quad \frac{Yr}{Bo} \qquad (3)$$

D'une façon encore plus générale, si l'on veut faire coïncider le point Mo avec un point de référence ne représentant pas nécessairement le gris, et pour lequel les coordonnées Rr, Vr, Br ne sont donc plus nécessairement égales à une même valeur Yr, on formera les coefficients:

$$\frac{Rr}{Ro}, \quad \frac{Vr}{Vo}, \quad \frac{Br}{Bo} \qquad (4)$$

Ces relations admettent comme cas particulier les relations (3) avec $Rr = Vr = Br = Yr$ et les relations (2) lorsqu'en outre $Yr = Yo$.

Cette première variante présente un inconvénient lorsque l'image à traiter présente une couleur uniforme, par exemple le bleu. Dans ce cas, la correction ne consiste plus à faire coincider le point Mo avec le point de référence Mr mais seulement à réduire l'écart entre ces deux points. Sur la figure 1, cela signifie que Mo vient en M'o de coordonnées R'o, V'o, B'o situé entre Mo et Mr. Au lieu d'utiliser les coefficients définis par (1), on utilisera les coefficients suivants où a est un nombre compris entre 0 et 1:

$$\frac{R'o}{Ro} = a + (1-a)\frac{Yo}{Ro}, \quad \frac{V'o}{Vo} = a + (1-a)\frac{Yo}{Vo}, \quad \frac{B'o}{Bo} = a + (1-a)\frac{Yo}{Bo} \qquad (5)$$

On remarque que pour $a = 0$, on retrouve bien les relations (1). Si la luminance moyenne n'est pas conservée à sa valeur Yo, mais prend une nouvelle valeur Yr, on remplacera Yo par Yr dans les relations (5).

De façon la plus générale, les coefficients correcteurs par lesquels il faut multiplier R, V, B peuvent s'exprimer par:

$$\frac{R'o}{Ro} = a + (1-a)\frac{Rr}{Ro}, \quad \frac{V'o}{Vo} = a + (1-a)\frac{Vr}{Vo}, \quad \frac{B'o}{Bo} = a + (1-a)\frac{Br}{Bo} \qquad (6)$$

Après application de ces coefficients correcteurs, les valeurs moyennes deviennent:

R'o = aRo + (1-a)Rr
V'o = aVo + (1-a)Vr
B'o = aBo + (1-a)Br

Pour $a = 0$, on obtient les relations (4); en faisant en outre $Rr = Vr = Br = Yr$ on retrouve les relations (3). Pour $a = 0$ et $Yr = Yo$, on retrouve les relations (1).

L'expérience montre qu'un coefficient a proche de 1/2 convient parfaitement: les dominantes sur les images diversement colorées sont supprimées, et les images uniformément colorées ne sont pas transformées en images grises.

Dans un mode de réalisation avantageux le nombre $a$ est non pas fixe mais réglable en fonction de l'image à traiter. On peut par exemple faire varier $a$ entre

$$\frac{1}{4}$$

et 1, c'est-à-dire entre une correction très forte pour $a = \frac{1}{4}$

et une correction nulle pour $a = 1$, en fonction de l'excentrement du centre de gravité du nuage de points. Les coordonnées du centre de gravité du nuage de points sont Ro, Vo, Bo. Le nuage est "centré" si son centre de gravité coïncide avec le gris, c'est-à-dire si Ro = Vo = Bo = Yo. On mesure le caractère excentré du nuage par le rapport du maximum du triplet Ro, Vo, Bo au minimum de ce triplet (autrement dit de la coordonnée la plus grande à la coordonnée la plus petite), rapport que l'on note $r_o =$

$$\frac{\max(Ro, Vo, Bo)}{\min(Ro, Vo, Bo)}$$

où la notation max () représente le maximum de la quantité entre parenthèses et, de la même manière, min() le minimum de la quantité entre parenthèses. On vérifie bien que $r_o = 1$ pour le gris et que $r_o$ augmente lorsqu'on s'éloigne de cette référence. Dans le cas d'une dominante à supprimer $r_o$ reste faible. Dans le cas d'une couleur uniforme saturée, ro devient très grand. Pour des raisons de commodité de calcul, on borne ro à 256 et $a$ est calculé de la façon suivante: $a =$

$$\frac{1}{4}\frac{1}{r_o} + (1 - \frac{1}{r_o}).$$

Les formules (5) et (6) peuvent donc finalement s'exprimer en fonction de $r_o$.

Dans le cas de l'application de l'invention à la visiophonie, on s'efforce de se rapprocher d'un point qui n'est pas le gris pur mais un gris avec une légère dominante "chair". Ce point peut être défini à l'aide de trois paramètres, b, c et d par les coordonnées:

$$\frac{Yr(1+b)}{1+0,3b+0,59c+0,11d}, \quad \frac{Yr(1+c)}{1+0,3b+0,59c+0,11d}, \qquad (7)$$

$$\frac{Yr(1+d)}{1+0,3b+0,59c+0,11d}$$

Sur la figure 2, le point Lo correspond au gris pur (Rr = Vr = Br = Yo) et le point L'o à un gris avec dominante "chair".

Ces coordonnées sont quelque peu compliquées car il est nécessaire que le point L'o soit bien dans le plan de luminance. Mais pour b, c et d donnés, les trois coordonnées de L'o sont définies une fois pour toutes en fonction de Yr.

Les coefficients correcteurs permettant de faire passer la couleur moyenne Mo à M'o compris entre L'o et Mo s'obtiennent par des relations analogues à (5) dans lesquelles Yo est remplacé respectivement par les coordonnées (7) précédentes. Si l'on fait b = c = d = o on retrouve le point de référence correspondant au gris avec une luminance Yr, laquelle peut être prise égale à Yo.

Dans tout ce qui précède, on a supposé que les signaux traités étaient les signaux R, V, B. La correction de couleur affecte alors nécessairement la luminance de chaque point, puisqu'elle modifie R, V et B. Mais la luminance moyenne relative à l'ensemble des points échantillonnés peut éventuellement rester constante. Pour diverses raisons, et principalement pour des questions de papillotement et de codage d'image nécessitant un détecteur de mouvement, on peut s'astreindre à ne pas modifier la luminance Y du point courant de l'image.

L'invention prévoit, dans ce cas, un traitement qui ne porte que sur les signaux de différence DR et DB (qui contiennent l'information sur la couleur) et non sur le signal de luminance Y. Naturellement on pourrait toujours modifier la luminance si besoin était, mais de manière indépendante, après avoir procédé à une correction de couleur, à luminance constante.

Dans le cas du traitement de signaux DR, DB, Y les valeurs moyennes se présentent sous la forme DRo, DBo, Yo que l'on convertit en Ro, Vo, Bo par les relations de la page 5. Ayant ces moyennes Ro, Vo, Bo on effectue la correction déjà décrite et l'on obtient des R'o, V'o, B'o. On convertit ensuite les coordonnées moyennes corrigées R'o, V'o, B'o en signaux de différence respectivement DR'o et DB'o par les relations DR'o = R'o-Y'o, DB'o = B'o-Y'o (où, dans ce cas Y'o = Yo).

Ayant calculé les moyennes Yo, DRo et DBo des points échantillonnés, les deux coefficients correcteurs à utiliser sont égaux à DR'o-DRo et DB'o-DBo.

La correction consiste donc à modifier les signaux Y, DR et DB relatifs à chaque point d'image, en signaux Y'', DR'', DB'' définis par:

$$Y'' = Y, DR'' = A(DR + DR'o-DRo), DB'' = A(DB + DB'o-DBo) \quad (8)$$

expressions dans lesquelles A est un paramètre, qui peut être fixe ou réglable comme on le verra par la suite. Dans le cas d'une correction totale le point M'o est confondu avec le point de référence Mr et l'on a R'o = Rr, B'o = Br et Y'o = Yr (dans ce cas Y'o = Yo).

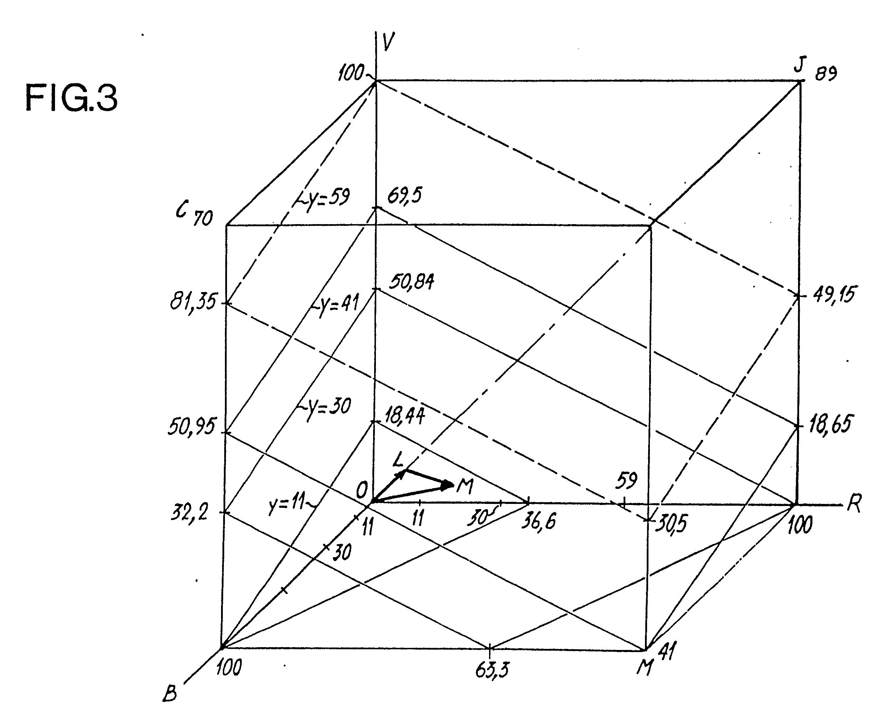

Pour comprendre le principe d'une telle correction, il faut se reporter au trièdre des couleurs tel qu'il est représenté sur la figure 3. L'origine est marquée 0 et les signaux R, V, B sont portés sur trois axes orthogonaux. L'ensemble des points d'une image colorée peut se traduire par un nuage de points situés à l'intérieur d'un cube de côté 100. Dans un tel cube, des plans d'équiluminance peuvent être définis. Par exemple, dans une échelle où l'on mesure R, V, B, Y de 0 à 100 le plan $Y = 0,3R + 0,59V + 0,11B = 11$, le plan $Y = 0,3R + 0,59V + 0,11B = 30$, le plan $0,3R + 0,59V + 0,11B = 41$ etc... Ces plans sont représentés sur la figure 3. Ils sont parallèles les uns aux autres. Il existe un plan particulier de luminance nulle ($Y = 0,3R + 0,59V + 0,11B = 0$) qui passe par l'origine.

Est tracée également, dans un tel cube, la diagonale OB qui représente le lieu des points gris.

On voit que, dans un tel repère, chaque point M de coordonnées (R, V, B) définit un vecteur

$$\overrightarrow{OM}$$

qui peut s'écrire

$$\overrightarrow{OM} = \overrightarrow{OL} + \overrightarrow{LM},$$

L étant le point d'intersection du plan de luminance $Y = 0,3R + 0,59V + 0,11B$ passant par M, avec la diagonale OB. Ceci revient à écrire les coordonnées de M respectivement sous la forme: $(Y) + (R-Y)$, $(Y) + (V-Y)$, $(Y) + (B-Y)$.

On voit que

$$\overrightarrow{LM}$$

a pour composante R-Y, V-Y, B-Y. Ne plus considérer la luminance des points revient à projeter, parallèlement à la diagonale OB, l'image des points du cube sur le plan de luminance nulle. Dans ce plan de luminance nulle, les points R, V, B sont les sommets d'un triangle. La direction du vecteur

$$\overrightarrow{Om},$$

projection de

$$\overrightarrow{LM},$$

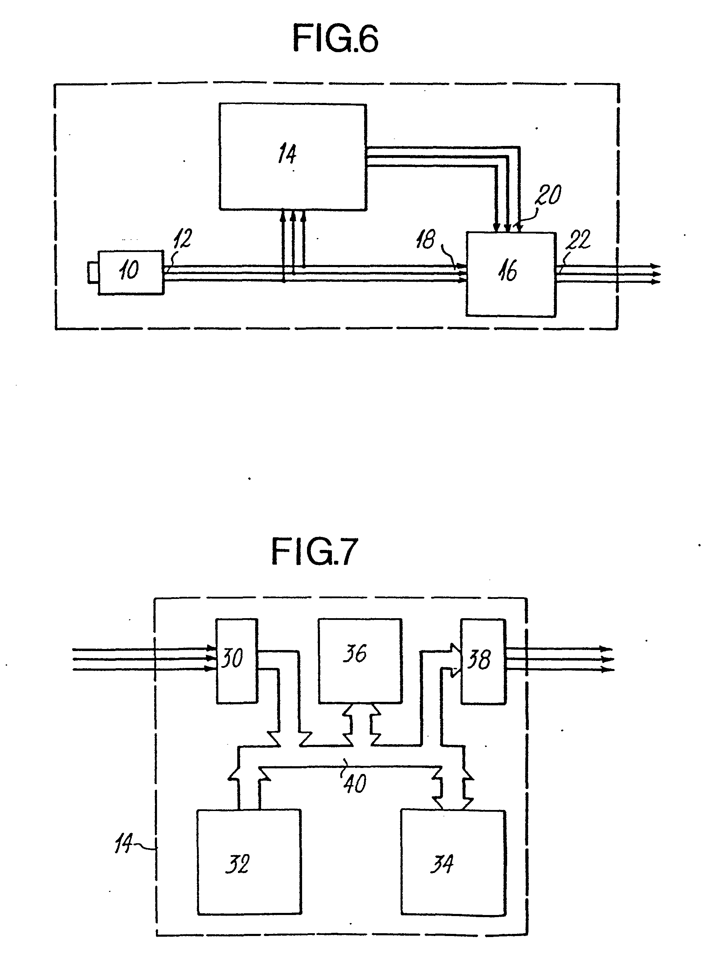

représente la teinte, et son amplitude est liée à la saturation. C'est ce qui est représenté sur la figure 4.

Ce nuage de points projetés a un centre mo dont les composantes sont (Ro-Yo), (Vo-Yo), (Bo-Yo), soit DRo, DVo, DBo.

De la même manière que dans la variante exposée plus haut, on souhaite que mo coïncide avec un point de référence lo qui est la projection d'un point de référence Lo représenté dans le trièdre ORVB et qui correspond au gris pur (ou d'un point L'o légèrement différent du gris pur, comme exposé plus haut).

On doit donc définir des coefficients de correction tels que le point moyen mo vienne en lo (ou en l'o). Comme le point gris Lo se projette en lo sur le plan de luminance nulle, la correction aura pour effet de translater le point mo en lo. En d'autres termes, la correction revient à translater le nuage points selon un vecteur

$$\overrightarrow{molo},$$

de telle sorte que le point moyen soit confondu avec lo. C'est ce qui est représenté sur la figure 5. Dans le cas où la correction est partielle la correction fait passer le point mo en m'o. D'où la correction annoncée se traduisant par DR + (DR'o-DRo) et DB + (DB'o-DBo).

Le paramètre A utilisé dans les relations (8) est destiné à modifier la saturation de l'image. Cette question peut être exposée en détail pour mieux comprendre le principe de réglage de ce paramètre. Le coefficient A des formules (8) est lié à la saturation des couleurs dans l'image. En effet si $A = 0$ on a $DR' = DB' = 0$ et l'image est en noir et blanc. La saturation d'une teinte est liée au rapport de deux quantités: l'écart au gris et la "quantité de gris" que possède cette teinte. La quantité de gris d'une couleur caractérisée par R, V, B est égale à min(R,V,B) où min() signifie, comme plus haut la plus petite des trois quantités entre parenthèses; l'écart au gris est max(R,V,B)-min(R,V,B) où max() désigne la plus grande des quantités entre parenthèses. Cependant, comme il s'agit d'une notion essentiellement subjective, il faut raisonner non plus sur les grandeurs électriques R, V, B mais sur les luminances correspondantes: $L_R = kR^\gamma$, $L_V = kV^\gamma$ et $L_B = kB^\gamma$ où $\gamma$ est le coefficient "gamma" des tubes couleurs (on a $\gamma = 2,6$) et k un coefficient permettant d'adapter les unités. On prend donc, comme définition de la saturation la quantité s égale à:

$$1 - \frac{1}{\left[\frac{\max(R,V,B)}{\min(R,V,B)}\right]^\gamma}$$

Par la suite on notera S la quantité

$$\left[\frac{\max(R,V,B)}{\min(R,V,B)}\right]^\gamma .$$

On rappelle que min(R,V,B), quantité de gris d'une couleur, est différent de la luminance $Y = 0,3R + 0,59V + 0,11B$ et que $\min(R,V,B) \leqslant Y \leqslant \max(R\ V\ B)$. Donc, si $B = \min(R,V,B)$ par exemple et $R = \max(R,V,B)$ on a $DR = R-Y \geqslant 0$ et $DB = B-Y \leqslant 0$ d'où après multiplication par A, $DR^\bullet = ADR$ et $DB^\bullet = ADB$, selon que A est supérieur ou inférieur à 1 on a:

avec $A > 1$: $DR^\bullet = ADR > DR > 0$ $DB^\bullet = ADB < DB < 0$ et

$$R^\ast = Y + DR^\ast > R$$
$$B^\ast = Y + DB^\ast < B$$

donc

$$\frac{R^\ast}{B^\ast} = \frac{\max(R^\ast, V^\ast, B^\ast)}{\min(R^\ast, V^\ast, B^\ast)} > \frac{R}{B} = \frac{\max(R,V,B)}{\min(R,V,B)}$$

Ainsi, avec $A > 1$ on augmente la saturation.
avec $A < 1$

$$R^\ast < R \quad \text{et} \quad \frac{R^\ast}{B^\ast} = \frac{\max(R^\ast, V^\ast, B^\ast)}{\min(R^\ast, V^\ast, B^\ast)} < \frac{R}{B} = \frac{\max(R,V,B)}{\min(R,V,B)}$$
$$B^\ast > B$$

Ainsi, avec $A < 1$ on diminue la saturation.

On calcule donc pour chaque point échantillonné la quantité S puis on définit la moyenne So de S par l'opération moyenne déjà définie. On cherche alors à imposer à chaque image une saturation moyenne constante, c'est-à-dire que l'on souhaite obtenir la même quantité de couleur pour toutes les images, mais proportionnellement à leur luminance moyenne Yo (si une image est sombre on exige moins de couleur, si une image est très claire on souhaite plus de couleur). On va donc faire en sorte que la saturation moyenne So se rapproche d'une valeur standard soit mYo (m étant un paramètre soit fixé une fois pour toutes soit pouvant être modifié). So deviendra donc S'o par exemple par une loi linéaire du type $S'o = Soy + (1-y)mYo$ où y est un nombre qui sera défini plus loin. On prendra alors:

$$A=\left(\frac{S'o}{So}\right)^{1/2,8}=\left[y+(1-y)\,m\frac{Yo}{So}\right]^{1/2,8}$$

On vérifie bien que si $So< mYo$, on a $So< S'o <mYo$ et $A> 1$ si $So> mYo$, on a $So> S'o> mYo$ et $A< 1$.
Par ailleurs, le coefficient A peut être borné et on peut imposer $A <2$. Les formules (8) deviennent alors:

$$DR''=\left(\frac{S'o}{So}\right)^{1/2,8} x \quad (DR+DR'o-DR_O),$$

$$\tag{8'}$$

$$DB''=\left(\frac{S'o}{So}\right)^{1/2,8} x \quad (DB+DB'o-DB_O)$$

Il reste à déterminer y dans la formule linéaire $S'o = Soy + (1-y)mYo$. L'expérience montre que $y =$

$$\frac{1}{2}$$

convient pour toutes les images colorées, mais ne convient pas pour les images presque noir et blanc (dans ce cas $So=1$, $mYo$ peut être très grand et $S'o$ est donc très grand et on est donc conduit à amplifier sans raisons des signaux voisins de zéro, ce qui peut être dangereux). On fait donc varier y entre

$$\frac{1}{4}$$

et 1 (pour $(y =$

$$\frac{1}{4}$$

on a une forte correction, et pour $y=1$ une correction nulle) en fonction de la saturation elle-même So, par la relation $y =$

$$1\cdot\frac{1}{S_O} +(1-\frac{1}{S_O})\frac{1}{4},$$

S étant borné à 256. On obtient donc, en éliminant y:

$$A=\left(\frac{S'o}{So}\right)^{\frac{1}{2,8}}\left[\frac{1}{S_O} + (1-\frac{1}{S_O})\ \frac{1}{4} + (1-\frac{1}{S_O})\ \frac{3}{4}\ m\frac{Yo}{So}\right]^{\frac{1}{2,8}}$$

Le calcul de la saturation peut être effectué sur une image corrigée une première fois dans laquelle on a fait $A=1$.

Les principes qui viennent d'être décrits dans le cas de l'utilisation des signaux R, V, B ou des signaux Y, DR, DB sont transposables au cas où l'on utilise les signaux $Y, E_Q, E_I$. On utilise alors des moyennes $E_{Io}, E_{Qo}, Yo$ que l'on convertit en Ro, Vo, Bo par les relations de la page 5. Ayant ces moyennes Ro, Vo, Bo on effectue la correction déjà décrite et on obtient des R'o, V'o, B'o qui permettent d'obtenir les signaux $E'_{Io}, E'_{Qo}$ par les formules donnant $E_I$ et $E_Q$ en fonction de R, V, B. On obtient alors une correction définie par:

$Y'' = Y$, $E''_Q = A(E_Q + E'_{Qo} - E_{Qo})$, $E''_I = A(E'_I + E'_{Io} - E_{Io})$ (8'')

Après cette description du procédé de l'invention, la figure 6 représente un système qui met en oeuvre un tel procédé. Tel que représenté, ce système comprend un dispositif de prise de vues 10, avec une sortie de type quelconque (vidéo, numérique, composite ou composantes) et un organe 14 de traitement numérique en dérivation sur la sortie 12. La fonction de cet organe est de prélever les échantillons des signaux relatifs à certains points des images, de calculer les moyennes de ces échantillons, de définir des valeurs de référence et de calculer des coefficients correcteurs à partir des moyennes obtenues et des valeurs de référence. Le système représenté comprend encore un circuit de correction 16 à deux entrées, l'une 18 recevant les signaux délivrés par le dispositif de prise de vues et l'autre, 20, recevant les coefficients de correction délivrés par l'organe 14; le circuit 16 possède par ailleurs une sortie 22 délivrant des signaux corrigés.

Naturellement, il n'est pas nécessaire de prélever les signaux après la sortie 12 du dispositif 10; on peut, dans certains cas, prélever des échantillons directement dans le dispositif de prise de vues 10.

La première tâche de l'organe 14 est d'échantillonner les signaux vidéo, c'est-à-dire de prélever un groupe de trois signaux (R, V, B ou Y, DR, DB) parmi les signaux délivrés, le point correspondant à ces échantillons devant se déplacer de manière aléatoire à travers l'image. Le microprocesseur contenu dans l'organe de traitement s'acquitte de cette première tâche en mettant en oeuvre une suite de nombres dite suite 2-équipartie.

La théorie des fonctions pseudoaléatoires basée sur la notion de suite équipartie indique que la suite $n = Fr(\alpha n^2)$ où n est un entier et où la notation Fr() signifie "partie fractionnaire du nombre entre parenthèses" est 2-équipartie (dans le carré unité du plan) si $\alpha$ est irrationnel. Le terme "2-équipartie" signifie que pour la suite $u_n$, $u_{n+1}$, $u_{n+2}$... $u_{n+p}$, les points du plan de coordonnées $(u_n, u_{n+1})$, $(u_{n+1}, u_{n+2})$... $(u_{n+p}, u_{n+p+1})$... sont équipartis dans le carré de côtés 1.

Comme en informatique les nombres irrationnels n'existent pas, on prend pour $\alpha$ un nombre rationnel égal à

$$\frac{p}{q}$$

qui est alors la représentation irréductible du nombre $\alpha$. Dans ce cas, la suite $u_n$ devient périodique de période q. Avec un microprocesseur travaillant sur des mots de 8 éléments binaires extensibles à 16 pour les opérations arithmétiques, on choisit pour q le plus grand nombre possible, c'est-à-dire $q = 2^{16}-1$. Etant donné que l'on utilise un terme $u_n$ par trame, si l'image est décomposé en trames (par exemple deux trames éventuellement entrelacées), cela conduit à une période de répétition d'environ 20 mn, ce qui est suffisant pour une application visiophonique.

Dans une application spécialement étudiée par le demandeur, l'image mémorisée se présente sous la forme d'un rectangle d'environ 600 lignes visibles de 600 points chacune et chaque trame comprend 300 lignes. On détermine, dans cette trame, une zone de 256 points sur 256 lignes, qui joue le rôle du carré unité défini ci-dessus. La suite $u_n$ est alors $u_n = E$

$$\left[ 256 Fr \left( \frac{p}{q} n^2 \right) \right]$$

où E [] désigne la partie entière du nombre entre crochets.
Le microprocesseur exécute ainsi les opérations suivantes:
- lecture du contenu d'un registre interne dans lequel est stocké n,
- multiplication de n par n,
- multiplication de $n^2$ par p,
- division de $pn^2$ par q,
- abandon de la partie entière de

$$\frac{p}{q} n^2$$

(donc conservation de la partie fractionnaire Fr

$$\left( \frac{p}{q} n^2 \right),$$

- multiplication de Fr

$$\left( \frac{p}{q} n^2 \right)$$

par 256,
- abandon de la partie fractionnaire de $256 \times Fr$

$$\left( \frac{p}{q} n^2 \right),$$

- augmentation de 1 du registre contenant n, etc...

Le contenu n du registre peut être égalé à zéro à la mise en route. Le programme précédent est exécuté en début de chaque trame. Le temps de calcul est inférieur à la durée d'une trame, et l'on conserve dans une mémoire deux résultats successifs. Ces deux résultats, qui sont des adresses, sont transmis hors microprocesseur au début de chaque trame, à deux comparateurs. Deux compteurs délivrent en permanence l'adresse horizontale et verticale du point courant à ces deux comparateurs. Lorsqu'il y a coïncidence avec les adresses calculées, le point courant est stocké provisoirement dans une mémoire d'entrée-sortie du microprocesseur, puis transféré en mémoire interne.

Le point courant échantillonné se traduit par trois mots de 8 éléments binaires (R, V, B ou Y, DR, DB ou Y, $E_I$, $E_Q$). La zone mémoire réservée au calcul de moyenne est située en mémoire interne et est organisée en trois tableaux circulants de longueur 128 (par exemple). Cela signifie que le 129ème mot viendra s'écrire à la place du premier, le 130ème à la place du 2ème, etc... Ces tableaux contiennent en permanence les signaux correspondant aux 128 derniers points échantillonnes.

Le calcul de la couleur moyenne est obtenu à chaque trame en effectuant la moyenne des contenus des trois tableaux. En cas de moyenne arithmétique on effectue la somme des contenus des trois tableaux puis on divise le résultat par 128. Mais on peut aussi effectuer une moyenne pondérée. Les signaux de moyenne Ro, Vo, Bo ou Yo, $DR_o$, $DB_o$ ou Yo, $E_{I_o}$, $E_{Q_o}$ sont donc réactualisés en permanence.

Les formules précédentes, définissant les coefficients, font apparaître des paramètres a, b, c, d. S'ils sont fixés définitivement, ils sont introduits dans le programme général de l'organe de traitement 14. S'il faut les ajuster, des boutons à action manuelle permettront de les introduire dans l'organe de traitement.

Un exemple de calcul des coefficients correcteurs est maintenant indiqué. Soit à calculer le coefficient $aRo + (1-a)Yo$

$$\frac{1+b}{1+0{,}3b+0{,}59c+0{,}11d} \cdot$$

La quantité

$$\frac{1+b}{1+0{,}3b+0{,}59c+0{,}11d}$$

est calculée une fois pour toutes en début de séquence. Elle n'est pas recalculée à chaque trame. Cette quantité peut même être entrée toute calculée dans le programme. Par ailleurs est recalculée, à chaque trame, la quantité $aRo + (1-a)YoQ$ puisque Ro et Yo changent à chaque fois. Cela nécessite donc trois multiplications et une addition, ce qui est particulièrement simple pour un microprocesseur.

La figure 7 illustre le schéma fonctionnel d'un organe de traitement tel qu'il vient d'être défini. Il se compose d'une interface d'entrée 30, d'une mémoire de programme 32 (type ROM ou PROM), d'une mémoire vive 34 (type RAM), qui sert à stocker les trois tableaux R, V, B ou Y, DR, DB ou Y, $E_I$, $E_Q$ ainsi que les résultats de calcul, d'une unité arithmétique 36 (sachant effectuer les opérations élémentaires addition, soustraction, produit, division, décalage à droite, décalage à gauche, Fr() et E [] définies plus haut), d'une interface de sortie 38 et enfin d'un bus 40 reliant entre elles ces différentes unités.

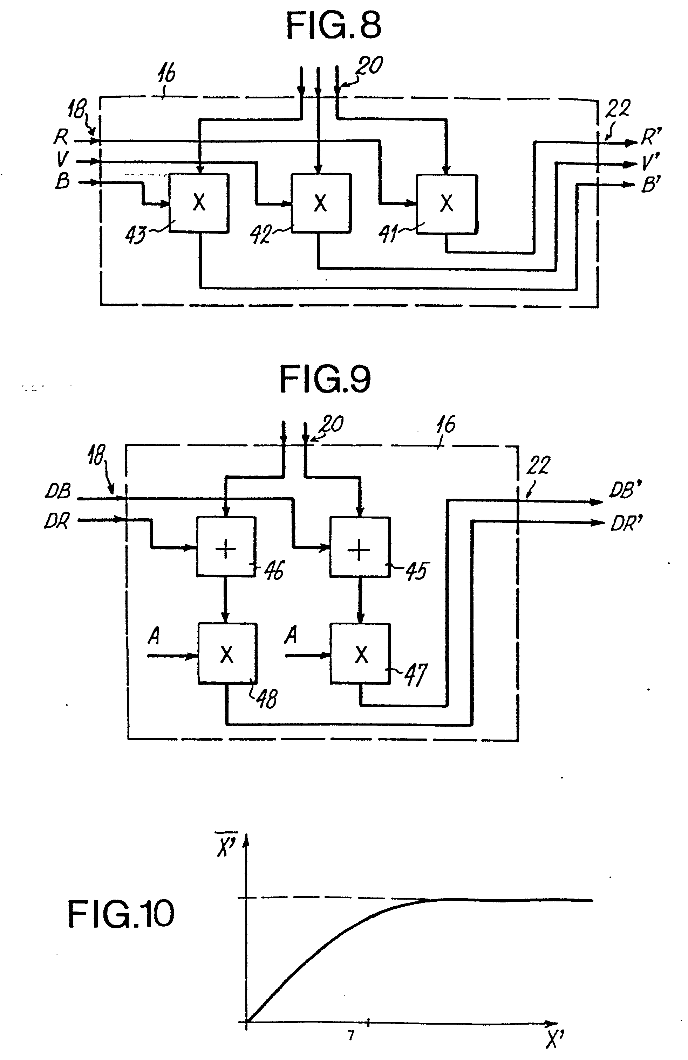

Les figures 8 et 9 illustrent la structure du circuit de correction dans les trois cas envisagés plus haut, de correction des signaux R, V, B, Y, DB, DR ou Y, $E_I$, $E_Q$. Dans le premier cas, le circuit comprend trois multiplieurs 41, 42, 43 (numériques ou analogiques) affectés respectivement à la correction des signaux R, V, B et délivrant des signaux corrigés R', V', B'. Dans le deuxième et le troisième cas, ce circuit comprend deux additionneurs 45, 46 (analogiques ou numériques) suivis de deux multiplieurs par A, soit 47, 48, l'ensemble effectuant les deux dernières opérations des relations (8) et (8'').

Dans ces deux types de circuit de correction, il existe des circuits écrêteurs pour limiter l'amplitude des signaux de sortie. La figure 10 représente une caractéristique possible pour un tel écrêteur, qui transforme un signal X' quelconque (en pratique R', V', B' ou DB'', DR'') en un signal écrêté X̆'. Dans le cas illustré l'écrêteur est progressif.

Si le signal X' n'est pas positif comme pour DB, DR, $E_I$, $E_Q$, la figure 10 représente la fonction d'écrêtage de la partie positive. Il faut bien entendu écrêter la partie négative par un écrêteur symétrique (par rapport à l'origine).

## Revendications

1. Procédé de correction permanente de couleur applicable à un dispositif de prise de vues vidéo, ce dispositif engendrant des signaux primaires aptes à caractériser l'état colorimétrique de l'image, un traitement étant effectué sur ces signaux pour les corriger, ce procédé étant caractérisé par le fait qu'il consiste à :
   - prélever en cours de prise de vues, des échantillons des signaux relatifs à certains points des images,
   - mémoriser sous forme numérique un ensemble de ces échantillons relatifs à au moins une image,
   - calculer numériquement les moyennes des échantillons mémorisés, ce qui définit une couleur moyenne,
   - calculer des coefficients correcteurs à partir de la couleur moyenne obtenue, ces coefficients correcteurs,

lorsqu'appliqués aux échantillons, définissant une couleur moyenne corrigée,
- appliquer à tous les signaux délivrés par le dispositif de prise de vues, pour tous les points des images, les coefficients correcteurs ainsi calculés, ce qui fournit des signaux corrigés,
- réactualiser le calcul des coefficients correcteurs en réactualisant l'ensemble des échantillons servant à calculer lesdites moyennes.

2. Procédé selon la revendication 1, caractérisé par le fait que, pour calculer les moyennes en question, on prélève les signaux relatifs à au moins un point de chaque image.

3. Procédé selon la revendication 2, caractérisé par le fait que l'on prélève un point de chaque image, ce point ayant une position qui change d'image en image de manière aléatoire.

4. Procédé selon la revendication 2, caractérisé par le fait que les moyennes sont calculées à chaque nouvelle image, en prenant toujours en compte un même nombre de points.

5. Procédé selon la revendication 2, caractérisé en ce que chaque image est constituée de deux trames, et en ce qu'on prélève un point de chaque trame.

6. Procédé selon la revendication 1, dans lequel le dispositif de prise de vues utilise, pour traduire la luminance et la couleur de chaque point d'image, trois signaux de couleurs primaires R, V, B, caractérisé par le fait qu'on calcule pour les échantillons prélevés les moyennes Ro, Vo, Bo des signaux correspondants, on définit une couleur de référence dont les composantes primaires sont Rr, Vr, Br, on définit des coefficients correcteurs par lesquels on multiplie tous les signaux R, V, B correspondant aux différents points des images, de telle sorte que les moyennes des échantillons prennent des valeurs corrigées R'o, V'o, B'o définies par:

$R'o = aRo + (1-a)Rr$
$V,o = aVo + (1-a)Vr$
$B'o = aBo + (1-a)Br$

où a est un coefficient compris entre 0 et 1.

7. Procédé selon la revendication 6, caractérisé en ce que le coefficient $\underline{a}$ est réglable.

8. Procédé selon la revendication 7, caractérisé en ce qu'on détermine le rapport ($r_0$) entre la plus grande des moyennes Ro, Vo, Bo et la plus petite de ces moyennes, et qu'on détermine le coefficient $\underline{a}$ à partir de $r_0$ par une relation prédéterminée.

9. Procédé selon la revendication 8, caractérisé en ce que la relation liant $\underline{a}$ à $r_0$ est:

$$a = \frac{11}{4r_o} + \left(1 - \frac{1}{r_o}\right).$$

10. Procédé selon la revendication 6, caractérisé en ce que les composantes Rr, Vr, Br de la couleur de référence sont égales à:

$$\frac{Yr(1+b)}{1+0,3b+0,59c+0,11}, \qquad \frac{Yr(1+c)}{1+0,3b+0,59c+0,11d},$$

$$\frac{Yr(1+d)}{1+0,3b+0,59c+0,11d},$$

où b, c, d sont des paramètres.

11. Procédé selon la revendication 1, dans lequel le dispositif de prise de vues utilise, pour traduire la luminance et la couleur de chaque point d'image, un signal Y traduisant directement cette luminance et deux signaux de différence DR, DB contenant la totalité de l'information de couleur, caractérisé par le fait qu'on calcule les moyennes de ces signaux de différence, soit DRo et DBo, à partir des moyennes DRo et DBo on calcule les moyennes correspondantes Ro, Vo, Bo, on effectue la correction de ces valeurs moyennes et l'on obtient des moyennes corrigées R'o, V'o, B'o, d'où l'on tire des signaux moyens corrigés DR'o et DB'o et l'on effectue la correction:

a(DR+DR'o-DRo), A(DB+DB'o-DBo)

où A est un paramètre, la luminance Y de chaque point n'étant pas modifiée.

12. Procédé selon la revendication 1, dans lequel le dispositif de prise de vues utilise, pour traduire la luminance et la couleur de chaque point d'image, un signal Y traduisant directement cette luminance et deux signaux $E_I$, $E_Q$ contenant la totalité de l'information de couleur, caractérisé par le fait qu'on calcule les moyennes de ces signaux, soit $E_{Io}$ et $E_{Qo}$, on définit des moyennes de référence $E_{Ir}$, $E_{Qr}$, à partir des moyennes $E_{Io}$, $E_{Qo}$, on calcule les moyennes correspondantes Ro, Vo, Bo, on effectue la correction de ces valeurs moyennes et l'on obtient des moyennes corrigées R'o, V'o, B'o, d'où l'on tire des signaux moyens corrigés $E'_{Io}$, $E'_{Qo}$ et l'on effectue la correction:

$A(E_I + E'_{Io} - E_{Io})$, $A(E_Q + E'_{Qo} - E_{Qo})$

où A est un paramètre, la luminance Y de chaque point n'étant pas conservée.

13. Procédé selon l'une quelconque des revendications 11 et 12, caractérisé en ce que pour chaque échantillon on calcule un paramètre S égal au rapport entre le plus grand des signaux R, V, B et le plus petit, rapport qu'on élève à la puissance 2,8, puis on calcule la moyenne So de S, ce qui définit une saturation moyenne, on définit une saturation standard et on corrige l'image pour que sa saturation moyenne So se rapproche de la saturation standard et devienne S'o, et on prend le coefficient A égal à

$$(\frac{S'o}{So})^{1/2,8}.$$

14. Procédé selon la revendication 13, caractérisé en ce qu'on définit une saturation standard égale à mYo où m est un paramètre prédéterminé et Yo est la luminance moyenne et on calcule la saturation corrigée S'o par la relation $S'o = Soy + (1-y)mYo$ où y est un nombre au moins égal à 1.

15. Procédé selon la revendication 14, caractérisé en ce que le nombre y est réglable.

16. Procédé selon la revendication 15, caractérisé en ce que le nombre y est défini par la relation:

$$y = \frac{1}{So} + (1 - \frac{1}{So})\frac{1}{4}$$

17. Procédé selon la revendication 1, caractérisé en ce que la moyenne en question est une moyenne arithmétique.

18. Procédé selon la revendication 1, caractérisé en ce que la moyenne en question est une moyenne pondérée.

19. Procédé selon la revendication 1, caractérisé en ce qu'on écrête les signaux corrigés.

20. Système de correction permanente de couleur mettant en oeuvre le procédé selon la revendication 1, ce système étant associé à un dispositif de prise de vues vidéo (10) engendrant des signaux aptes à caractériser la luminance et la couleur de ce point, ce système comprenant des moyens pour effectuer un traitement de ces signaux et pour en déduire une correction de ces signaux, ce système étant caractérisé par le fait qu'il comprend:

- un organe de traitement numérique (14) apte à prélever en cours de prise de vues des échantillons des signaux relatifs à certains points des images, à mémoriser sous forme numérique un ensemble de ces échantillons relatifs à au moins une image, à calculer numériquement les moyennes des échantillons mémorisés, ce qui définit une couleur moyenne, à calculer numériquement des coefficients correcteurs à partir de la couleur moyenne obtenue, ces coefficients correcteurs, lorsqu'appliqués aux échantillons, définissant une couleur moyenne corrigée; et apte à réactualiser le calcul des coefficients correcteurs en réactualisant l'ensemble des échantillons servant à calculer les moyennes,

- un circuit de correction (16) à deux entrées, l'une (18) reliée à la sortie (12) du dispositif de prise de vues (10) et l'autre (20) reliée à l'organe de traitement (14) et recevant de celui-ci les coefficients correcteurs, et à une sortie (22) délivrant des signaux corrigés.

21. Système selon la revendication 20, dans lequel les signaux utilisés par le dispositif de prise de vues sont trois signaux de couleurs primaires R, V, B, caractérisé par le fait que l'organe de traitement numérique (14) calcule et délivre des coefficients de correction multiplicatifs et que le circuit de correction comprend trois multiplieurs numériques (41, 42, 43) recevant chacun l'un des trois signaux de couleur primaire et le coefficient correcteur correspondant.

22. Système selon la revendication 20, dans lequel les signaux utilisés par le dispositif de prise de vues sont un signal Y traduisant directement la luminance du point et des signaux de différence DR, DB ou des signaux $E_I$, $E_Q$ contenant la totalité de l'information de couleur, caractérisé par le fait que l'organe de traitement numérique (14) calcule et délivre des coefficients de correction additifs et que le circuit de correction comprend deux additionneurs numériques (45, 46) recevant les signaux de différence et les coefficients de correction correspondants et deux multiplieurs (47, 48) reliés aux deux additionneurs.

23. Système selon la revendication 20, caractérisé en ce que le circuit de correction (16) est suivi d'écrêteurs.

**0 114 559**

## Patentansprüche

1. Verfahren zur ständigen Farbkorrektur für eine Video-Bildaufnahmevorrichtung, wobei diese Vorrichtung erste Signale erzeugt, die zur Kennzeichnung des farbmetrischen Zustands des Bildes geeignet sind, und eine Verarbeitung bei diesen Signalen zu deren Korrektur ausgeführt wird, wobei dieses Verfahren dadurch gekennzeichnet ist, daß es darin besteht:
- während des Aufnehmens Signalproben bezüglich gewisser Bildpunkte zu erfassen,
- in digitaler Form eine Gesamtheit dieser Proben bezüglich wenigstens eines Bildes zu speichern,
- numerisch die Mittel der gespeicherten Proben zu berechnen, was eine mittlere Farbe festlegt,
- Korrekturkoeffizienten aufgrund der erhaltenen, mittleren Farbe zu berechnen, wobei diese Korrekturkoeffizienten, wenn sie auf die Proben angewandt werden, eine korrigierte, mittlere Farbe bestimmen,
- bei allen von der Aufnahmevorrichtung gelieferten Signalen für alle Bildpunkte die derart berechneten Korrekturkoeffizienten anzuwenden, was korrigierte Signale ergibt,
- die Berechnung der Korrekturkoeffizienten zu aktualisieren, indem die Gesamtheit der Proben aktualisiert wird, die zur Berechnung der Mittel dient.

2. Verfahren nach Anspruch 1, dadurch gekennzeichnet, daß man zur Berechnung der in Frage stehenden Mittel Signale bezüglich wenigstens eines Punktes von jedem Bild erfaßt.

3. Verfahren nach Anspruch 2, dadurch gekennzeichnet, daß man von jedem Bild einen Punkt nimmt, der eine Lage aufweist, die sich von einem Bild zum anderen zufällig ändert.

4. Verfahren nach Anspruch 2, dadurch gekennzeichnet, daß die Mittel bei jedem neuen Bild berechnet werden, wobei stets eine gleiche Anzahl von Punkten berücksichtigt wird.

5. Verfahren nach Anspruch 2, dadurch gekennzeichnet, daß jedes Bild von zwei Halbbildern gebildet ist und daß man einen Punkt von jedem Halbbild nimmt.

6. Verfahren nach Anspruch 1, bei dem die Aufnahmevorrichtung zum Umsetzen der Helligkeit und der Farbe für jeden Bildpunkt drei Signale der Primärfarben R, V,B verwendet, dadurch gekennzeichnet, daß man für die genommenen Proben die Mittel Ro, Vo, Bo der entsprechenden Signale berechnet, man eine Bezugsfarbe bestimmt, deren Primärkomponenten Rr, Vr, Br sind, man Korrekturkoeffizienten bestimmt, mit denen man alle Signale R, V, B multipliziert, die den verschiedenen Bildpunkten entsprechen, derart, daß die Mittel der Proben korrigierte Werte R'o, V'o, B'o erhalten, die definiert sind durch:

R'o = aRo + (1-a)Rr
V'o = aVo + (1-a)Vr
B'o = aBo + (1-a)Br

worin a ein Koeffizient zwischen 0 und 1 ist.

7. Verfahren nach Anspruch 6, dadurch gekennzeichnet, daß der Koeffizient a einstellbar ist.

8. Verfahren nach Anspruch 7, dadurch gekennzeichnet, daß man das Verhältnis $(r_o)$ zwischen dem größten Mittelwert Ro, Vo, Bo und dem kleinsten dieser Mittelwerte bestimmt und daß man den Koeffizienten a aufgrund von $r_o$ nach einer vorbestimmten Beziehung bestimmt.

9. Verfahren nach Anspruch 8, dadurch gekennzeichnet, daß die Beziehung, die a mit $r_o$ verbindet, lautet:

$$a = \frac{11}{4r_o} + (1 - \frac{1}{r_o}).$$

10. Verfahren nach Anspruch 6, dadurch gekennzeichnet, daß die Komponenten Rr, Vr, Br der Bezugsfarbe sind:

$$\frac{Yr(1+b)}{1+0{,}3b+0{,}59c+0{,}11}, \qquad \frac{Yr(1+c)}{1+0{,}3b+0{,}59c+0{,}11d},$$

$$\frac{Yr(1+d)}{1+0{,}3b+0{,}59c+0{,}11d},$$

mit b, c, d Parametern.

11. Verfahren nach Anspruch 1 bei dem die Aufnahmevorrichtung zum Umsetzen der Helligkeit und der

14

Farbe eines jeden Bildpunktes ein Signal Y, welches unmittelbar diese Helligkeit umsetzt, und zwei Differenzsignale DR, DB verwendet, die die gesamte Farbinformation enthält, dadurch gekennzeichnet, daß man die Mittelwerte dieser Differenzsignale, d.h. DRo und DBo aufgrund der Mittelwerte DRo und DBo berechnet, man die entsprechenden Mittelwert Ro, Vo, Bo berechnet, man die Korrektur dieser Mittelwert durchführt und die korrigierten Mittelwerte R'o, V'o, B'o erhält, von denen man die korrigierten mittleren Signale DR'o und DB'o ableitet und man die Korrektur durchführt:

A(DR + DR'o-DRo), A(DB + DB'o-DBo)

mit A einem Parameter, wobei die Helligkeit Y für jeden Punkt nicht verändert wurde.

12. Verfahren nach Anspruch 1, bei dem die Aufnahmevorrichtung zum Umsetzen der Helligkeit und der Farbe für jeden Bildpunkt ein Signal Y, welches unmittelbar diese Helligkeit umsetzt, und zwei Signale $E_I$, $E_Q$ verwendet, die die gesamte Farbinformation enthalten, dadurch gekennzeichnet, daß man die Mittel dieser Signale, d.h. $E_{Io}$ und $E_{Qo}$ berechnet, man die Bezugsmittel $E_{Ir}$, $E_{Qr}$ ausgehend von den Mitteln $E_{Io}$, $E_{Qo}$ bestimmt, man die entsprechenden Mittel Ro, Vo, Bo berechnet, man die Korrektur dieser Mittelwerte durchführt und korrigierte Mittel R'o, V'o, B'o erhält, von denen man die korrigierten mittleren Signale $E'_{Io}$, $E'_{Qo}$ ableitet und man die Korrektur durchführt:

A($E_I + E'_{Io}-E_{Io}$), A($E_Q + E'_{Qo}-E_{Qo}$)

mit A einen Parameter, wobei die Helligkeit Y für jeden Punkt nicht bewahrt wurde.

13. Verfahren nach Anspruch 11 oder 12, dadurch gekennzeichnet, daß man für jede Probe einen Parameter S berechnet, der gleich dem Verhältnis zwischen dem Größten der Signale R, V, B und dem Kleinsten ist, daß man das Verhältnis hoch 2,8 nimmt, dann den Mittelwert So von S berechnet der eine mittlere Sättigung bestimmt, man eine Standardsättigung definiert und das Bild so korrigiert, daß sich die mittlere Sättigung $S_o$ der Standardsättigung nähert und S'o wird, und daß man den Koeffizienten A gleich

$$(\frac{S'o}{So})^{1/2,8}$$

setzt.

14. Verfahren nach Anspruch 13, dadurch gekennzeichnet, daß man eine Standardsättigung festlegt, die gleich mYo ist, mit m einem vorbestimmten Parameter und Yo der mittleren Helligkeit, und daß man die korrigierte Sättigung S'o mittels der Beziehung

S'o = Soy + (1-y)mYo

korrigiert, worin y eine Zahl mindestens gleich 1 ist.

15. Verfahren nach Anspruch 14, dadurch gekennzeichnet, daß die Zahl y einstellbar ist.

16. Verfahren nach Anspruch 15, dadurch gekennzeichnet daß die Zahl y festgelegt ist durch die Beziehung:

$$y = \frac{1}{So} + (1-\frac{1}{So})\frac{1}{4}$$

17. Verfahren nach Anspruch 1, dadurch gekennzeichnet, daß das in Frage stehende Mittel ein arithmetisches Mittel ist.

18. Verfahren nach Anspruch 1, dadurch gekennzeichnet, daß das in Frage stehendes Mittel ein gewichtetes Mittel ist.

19. Verfahren nach Anspruch 1, dadurch gekennzeichnet, daß man den korrigierten Signalen die Spitzen abschneidet.

20. System zur ständigen Farbkorrektur zur Durchführung des Verfahrens nach Anspruch 1, wobei dieses System einer Video-Aufnahmevorrichtung (10) zugeordnet ist, die Signale erzeugt, die zum Kennzeichnen der Helligkeit und Farbe dieses Punktes geeignet sind, und das System Mittel umfaßt, um eine Verarbeitung dieser Signale durchzuführen, und von ihnen eine Korrektur dieser Signale abzuleiten, wobei dieses System dadurch gekennzeichnet ist, daß es umfaßt:

- ein numerisches Verarbeitungsorgan (14), welches geeignet ist, während der Aufnahmen Proben von Signalen bezüglich gewisser Bildpunkte zu nehmen, eine Gesamtheit dieser Proben bezüglich wenigstens eines Bildes in numerischer Form zu speichern, numerisch die Mittel der gespeicherten Proben zu berechnen, was eine mittlere Farbe bestimmt, numerisch Korrekturkoeffizienten aufgrund des erhaltenen Farbmittels zu berechnen, wobei diese Korrekturkoeffizienten, wenn sie auf die Proben angewandt werden, eine mittlere, korrigierte Farbe bestimmen, und geeignet ist, die Berechnung der Korrekturkoeffizienten zu aktualisieren, indem die Gesamtheit der der Berechnung der Mittel dienenden Proben aktualisiert wird,

- eine Korrekturschaltung (16) mit zwei Eingängen, von denen einer (18) mit dem Ausgang (12) der Aufnahmevorrichtung (10) und der andere (20) mit dem Verarbeitungsorgan (14) verbunden ist und von diesem die Korrekturkoeffizienten erhält, sowie mit einem die korrigierten Signale liefernden Ausgang (22).

21. System nach Anspruch 20, bei dem die für die Aufnahmevorrichtung verwendeten Signale drei Signale der Primärfarben R, V, B sind, dadurch gekennzeichnet, daß das numerische Verarbeitungsorgan (14) multiplikative Korrekturkoeffizienten berechnet und liefert und daß die Korrekturschaltung drei numerische Multiplikationseinrichtungen (41, 42, 43) umfaßt, von denen jede eines der drei Primärfarbsignale und den entsprechenden Korrekturkoeffizienten erhält.

22. System nach Anspruch 20, bei dem die von der Aufnahmevorrichtung verwandten Signale ein Signal Y, welches unmittelbar die Helligkeit des Punktes umsetzt, und Differenzsignale DR, DB oder Signale $E_I$, $E_Q$ sind, die die Gesamtheit der Farbinformation enthalten, dadurch gekennzeichnet, daß das numerische Verarbeitungsorgan (14) additive Korrekturkoeffizienten berechnet und liefert und daß die Korrekturschaltung zwei numerische Addiereinrichtungen (45, 46) aufweist, die die Differenzsignale und die entsprechenden Korrekturkoeffizienten erhalten, sowie zwei mit den zwei Addiereinrichtungen verbundene Multiplikationseinrichtungen (47, 48).

23. System nach Anspruch 20, dadurch gekennzeichnet, daß der Korrekturschaltung (16) Spitzenabschneider nachgeschaltet sind.

**Claims**

1. Continuous colour correction process applicable to a video-taking device, this device producing primary signals capable of characterizing the colorimetric state of the image, a processing being carried out on these signals in order to correct them, this process being characterized by the fact that it consists in:
   - the sampling during the take of signal samples relating to certain points of the images,
   - the storing in digital form of a group of these samples relating to at least one image,
   - the digital calculation of the averages of the stored samples, which defines an average colour,
   - the calculation of correction coefficients from the average colour obtained, these correction coefficients, when they are applied to the samples, defining a corrected average colour,
   - the application to all the signals delivered by the taking device, for all the points of the images, of the correction coefficients thus calculated, which provides corrected signals,
   - the up-dating of the calculation of the correction coefficients by updating all of the samples used to calculate the said averages.

2. Process according to Claim 1, characterized by the fact that in order to calculate the averages in question, signals are sampled which relate to at least one point of each image.

3. Process according to Claim 2, characterized by the fact that one point of each image is sampled, this point having a position which changes from image to image in a random way.

4. Process according to Claim 2, characterized by the fact that the averages are calculated at each new image, always taking a same number of points into account.

5. Process according to Claim 2, characterized in that each image is formed of two frames, and in that one point in each frame is sampled.

6. Process according to Claim 1, wherein the taking device uses, in order to represent the luminance and the colour of each point of the image, three primary colour signals R, G, B, characterized by the fact that for the samples taken, the averages of the corresponding signals Ro, Go, Bo are calculated, a reference colour is defined whose primary components are Rr, Gr, Br, correction coefficients are defined by which are multiplied all the R, G, B signals corresponding with the various points of the images such that the averages of the samples take corrected values R'o, G'o, B'o defined by:

R'o = aRo + (1-a)Rr
G'o = aGo + (1-a)Gr
B'o = aBo + (1-a)Br

where a is a coefficient between 0 and 1.

7. Process according to Claim 6, characterized in that the coefficient $\underline{a}$ is adjustable.

8. Process according to Claim 7, characterized in that the ratio $(r_o)$ between the largest of the averages Ro, Go, Bo and the smallest of these averages is determined, and that the coefficient $\underline{a}$ is determined from $r_o$ using a predetermined relationship.

9. Process according to Claim 8, characterized in that the relationship between $\underline{a}$ and $r_o$ is:

$$a = \frac{11}{4r_o} + \left(1 - \frac{1}{r_o}\right).$$

10. Process according to Claim 6, characterized in that the components Rr, Gr, Br of the reference colour are equal to:

$$\frac{Yr(1+b)}{1+0.3b+0.59c+0.11d} \quad , \quad \frac{Yr(1+c)}{1+0.3b+0.59c+0.11d}$$

$$\frac{Yr(1+d)}{1+0.3b+0.59c+0.11d}$$

where b, c and d are parameters.

11. Process according to Claim 1, wherein the taking device uses, in order to represent the luminance and the colour of each image point, a signal Y directly representing this luminance and two difference signals DR, DB containing all of the colour information, characterized by the fact that the averages of these difference signals are calculated, namely DRo and DBo, from the averages DRo and DBo the corresponding averages Ro, Go, Bo are calculated, these average values are corrected and the corrected averages R'o, G'o, B'o are obtained from which the corrected average signals DR'o and DB'o are obtained and the following correction is made:

$A(DR + DR'o-DRo)$, $A(DB + DB'o-DBo)$

where A is a parameter, the luminance Y of each point not being changed.

12. Process according to Claim 1, wherein the taking device uses, in order to represent the luminance and colour of each image point, a signal Y directly representing this luminance and two signals $E_I$, $E_Q$, containing all the colour information, characterized by the fact that the averages of these signals, namely $E_{Io}$ and $E_{Qo}$, are calculated, reference averages $E_{Ir}$, $E_{Qr}$, are defined, from the averages $E_{Io}$, $E_{Qo}$, the corresponding averages Ro, Go, Bo are calculated, these average values are corrected and the corrected averages R'o, G'o, B'o are obtained from which the corrected average signals $E'_{Io}$, $E'_{Qo}$ are obtained and the following correction is made:

$A(E_I + E'_{Io}-E_{Io})$, $A(E_Q + E'_{Qo}-E_{Qo})$

where A is a parameter, the luminance Y of each point not being retained.

13. Process according to either of Claims 11 and 12, characterized in that for each sample a parameter S is calculated that is equal to the ratio between the largest and the smallest of the signals R, G, B, a ratio which is raised to the power 2.8, then the average So of S is calculated, which defines an average saturation, a standard saturation is defined and the image is corrected so that its average saturation So is approximately the standard saturation and becomes S'o, and the coefficient A is taken as equal to

$$(\frac{S'o}{So})^{1/2,8} .$$

14. Process according to Claim 13, characterized in that a standard saturation is defined as equal to mYo where m is a predetermined parameter and Yo is the average luminance and the corrected saturation S'o is calculated by the relationship $S'o = Soy + (1-y)mYo$ where y is a number at least equal to 1.

15. Process according to Claim 14, characterized in that the number y is adjustable.

16. Process according to Claim 15, characterized in that the number y is defined by the expression:

$$y = \frac{1}{So} + (1-\frac{1}{So})\frac{1}{4}$$

17. Process according to Claim 1, characterized in that the average in question is an arithmetic average.

18. Process according to Claim 1, characterized in that the average in question is a weighted average.

19. Process according to Claim 1, characterized in that the corrected signals are clipped.

20. Continuous colour correction system implementing the process according to Claim 1, this system being associated with a video-taking device (10) producing signals capable of characterizing the luminance and the colour of this point, this system including means of processing these signals and of deducing from them a correction of these signals, this system being characterized by the fact that it includes:

- a digital processing unit (14) capable, during the take of sampling signals relating to certain points of the images, of storing in digital form a set of these samples relating to at least one image, of digitally calculating the averages of the stored samples, which defines an average colour, of digitally calculating correction coefficients from the average colour obtained, these correction coefficients, when applied to the samples, defining an average corrected colour; and capable of updating the calculation of the correction coefficients by updating all of the samples used to calculate the averages,

- a correction circuit (16) with two inputs, one (18) connected to the output (12) of the taking device (10) and the other (20) connected to the processing unit (14) and receiving from this unit the correction coefficients, and having one output (22) delivering corrected signals.

21. System according to Claim 20, wherein the signals used by the taking device are three primary colour signals, R, G, B, characterized by the fact that the digital processing unit (14) calculates and delivers multiplying correction coefficients and in that the correction circuit includes three digital multipliers (41, 42, 43) each receiving one of the three primary colour signals and the corresponding correction coefficient.

22. System according to Claim 20, wherein the signals used by the taking device are a signal Y directly representing the luminance of the point and difference signals DR, DB or signals $E_I$, $E_Q$, containing all the colour information, characterized by the fact that the digital processing unit (14) calculates and delivers additive correction coefficients and that the correction circuit includes two digital adders (45, 46) receiving the difference signals and the corresponding correction coefficients and two multipliers (47, 48) connected to the two adders.

23. System according to Claim 20, characterized in that the correction circuit (16) is followed by clippers.

18

FIG.1

FIG.2

FIG.4

FIG.5

FIG.3

# FIG.6

# FIG.7

# FIG.8

# FIG.9

# FIG.10